# EUROPÄISCHE PATENTSCHRIFT

(11) **EP 1 027 773 B1**
(45) Veröffentlichungstag und Bekanntmachung des Hinweises auf die Patenterteilung: **14.04.2004**
(21) Anmeldenummer: 98961047.2
(22) Anmeldetag: 26.10.1998
(51) Int. Cl.: H04B 7/005, H04Q 7/38

(54) **VERFAHREN, MOBILSTATION UND BASISSTATION ZUM VERBINDUNGSAUFBAU IN EINEM FUNK-KOMMUNIKATIONSSYSTEM**
METHOD, MOBILE STATION AND BASE STATION FOR ESTABLISHING CONNECTIONS IN A RADIOCOMMUNICATIONS SYSTEM
PROCEDE, STATION MOBILE ET STATION DE BASE POUR L'ETABLISSEMENT D'UNE COMMUNICATION DANS UN SYSTEME DE COMMUNICATION RADIO

(30) Priorität: 27.10.1997 DE 19747451
(43) Veröffentlichungstag der Anmeldung: 16.08.2000
(73) Patentinhaber: SIEMENS AKTIENGESELLSCHAFT, 80333 München (DE)
(72) Erfinder: LÜDERS, Christian, D-59872 Meschede (DE); KLEIN, Anja, D-10709 Berlin (DE); FÄRBER, Michael, D-82515 Wolfratshausen (DE)
(86) Internationale Anmeldenummer: PCT/DE1998/003134
(87) Internationale Veröffentlichungsnummer: WO 1999/022462

(56) Entgegenhaltungen:
- WO-A-93/07702
- US-A- 5 564 075
- PATENT ABSTRACTS OF JAPAN vol. 017, no. 404 (E-1405), 28. Juli 1993 & JP 05 075571 A (SONY CORP), 26. März 1993

## Beschreibung

Die Erfindung betrifft ein Verfahren zum Verbindungsaufbau für eine Mobilstation eines Funk-Kommunikationssystems, sowie eine derartig ausgestaltete Mobilstation und eine Basisstation.

Der Aufbau von digitalen Funk-Kommunikationssystemen ist in J.Oudelaar, "Evolution towards UMTS", PIMRC 94, 5th IEEE International Symp. on Personal, Indoor and Mobile Radio Communications, The Hague, NL, 18.-22. September 1994, S.852-856, und M.Lenti, H.Hageman, "Paging in UMTS", RACE Mobile Telecommunications Workshop, Vol. 1, Amsterdam, NL, 17.-19. Mai 1994, S.405-410, gezeigt.

Das gegenwärtig existierende Mobilfunksystem GSM (Global System for Mobile Communications) ist ein Funk-Kommunikationssystem mit einer TDMA-Komponente zur Teilnehmerseparierung (time division multiple access). Gemäß einer Rahmenstruktur werden Nutzinformationen der Teilnehmerverbindungen in Zeitschlitzen übertragen. Die Übertragung erfolgt blockweise. Aus dem GSM-Mobilfunksystem sind weiterhin dem Zeitraster der Rahmenstruktur angepaßte Frequenzkanäle (RACH random access channel) zum zufälligen Zugriff für die Mobilstationen bekannt. In diesem Frequenzkanal kann eine Mobilstation, die einen Verbindungsaufbau wünscht, einen Zugriffsfunkblock senden, ohne daß der Mobilstation vorher ein Frequenzkanal zugewiesen wurde.

Beim zufälligen Zugriff kann eine Sendeleistungsregelung nicht erfolgen, da die Übertragungsbedingungen sendeseitig noch nicht bekannt sind. Deshalb sendet eine Mobilstation üblicherweise mit für die Funkzelle maximaler Sendeleistung. Auch wird maximale Sendeleistung gewählt, um sicherzustellen, daß eine an den Rändern der Funkzelle befindliche Mobilstation, die einen Zugriffsfunkblock sendet, an der Basisstation ein Signal erzeugt, das stark genug für eine Detektion ist. Tätigen mehrere Mobilstationen den zufälligen Zugriff in demselben Zeitschlitz und Frequenzband gleichzeitig, könnten die leistungsschwächeren Funkblöcke nicht ausgewertet werden und müssten zu einem späteren Zeitpunkt von den betroffenen Mobilstationen nochmals gesendet werden. Treffen zwei oder mehr Signale mit nahezu gleicher Leistungsstärke ein, werden beide Signale möglicherweise nicht detektiert und müssen erneut initiiert werden.

In US 5 564 075 wird ein Verfahren zur Sendeleistungsregelung eines Zugriffsfunkblocks beschrieben, bei dem die Mobilstation eine von der Basisstation in einem Broadcast-Kanal übermittelte Sendeleistungsinformation mit einem gemessen Wert der empfangenen Sendeleistung der Basisstation abgleicht.

Der Erfindung liegt die Aufgabe zugrunde, ein Verfahren und Vorrichtungen bereitzustellen, die in einem Funk-Kommunikationssystem den Verbindungsaufbau für den zufälligen Zugriff der Mobilstationen unter möglichst effektiver Ausnutzung der funktechnischen Ressourcen ermöglichen. Diese Aufgabe wird durch das Verfahren mit den Merkmalen des Patentanspruchs 1, die Mobilstation mit den Merkmalen des Patentanspruchs 16 und die Basisstation mit den Merkmalen des Patentanspruchs 17 gelöst. Weiterbildungen der Erfindung sind den Unteransprüchen zu entnehmen.

Das Funk-Kommunikationssystem mit zumindest einer Basisstation sieht vor, für die Mobilstationen in Aufwärtsrichtung wiederkehrend Frequenzkanäle für einen zufälligen Zugriff bereitzustellen. Von der Mobilstation, die einen Verbindungsaufbau anfordert, wird eine Empfangsleistung eines in Abwärtsrichtung von der Basisstation gesendeten Signals gemessen und abhängig von der gemessenen Empfangsleistung eine Sendeleistung zum Senden eines Zugriffsfunkblocks zur Basisstation eingestellt.

Damit kann mobilstationsseitig eine flexible Sendeleistungsregelung mit Hilfe der gemessenen Empfangsleistung des basisstationsseitig ausgesendeten Signals auch für den zufälligen Zugriff der Mobilstation erfolgen, was bisher nicht zur Verfügung stand. Durch die Sendeleistungseinstellung für den zufälligen Zugriff (random access) können mehrere derartiger Zugriffe von verschiedenen Mobilstationen gleichzeitig erfolgen, ohne daß dadurch die anderen Signale, die in demselben Frequenzband oder auf benachbarten Trägern aktiv sind, gestört oder möglicherweise nicht mehr detektiert werden. Nachbarkanalinterferenzen werden gemindert bzw. beseitigt durch die flexible Leistungsregelung für den oder die Zugriffsfunkblöcke, die nicht in jedem Fall mit maximaler Sendeleistung übertragen werden müssen. Durch die erhöhte Rate von erfolgreichen Detektionen der ausgesendeten Zugriffsfunkblöcke - gleichbedeutend mit einer niedrigeren Rate von wiederkehrenden Zugriffsversuchen mangels ausreichender Detektion - werden die funktechnischen Ressourcen besser genutzt. Insgesamt wird auch der Verbindungsaufbau beschleunigt, da weniger Zugriffsversuche der Mobilstationen bis zu einem erfolgreichen Verbindungsaufbau nötig sind.

Besonders vorteilhaft ist die Erfindung bei einem TD/CDMA Funk-Kommunikationssystem anwendbar, da der Zugriffsfunkblock gleichzeitig in demselben Frequenzband aktiv ist wie andere Nutzsignale - z.B. Verkehrsdaten oder Signalisierungsinformationen oder Organisationsinformationen. Dabei sind die Informationen verschiedener Verbindungen in den von Zeitschlitzen gebildeten Frequenzkanälen gemäß einer verbindungsindividuellen Feinstruktur unterscheidbar. Vorzugsweise umfasst diese Feinstruktur Kodes, mit denen die einzelnen Teilnehmersignale gespreizt werden.

Die Erfindung führt darüber hinaus zu Vorteilen, wenn das Prinzip des Zufallszugriffs derart modifiziert ist, daß der Vielfachzugriff - vorzugsweise gemäß TD/CDMA - auch auf benachbarten Träger stattfindet, sodaß hohe Nachbarkanalinterferenzen bei stark unterschiedlichen Empfangsleistungen der verschiedenen Zugriffsfunkblöcke basisstationsseitig zu erwarten sind. Dies kann durch die Erfindung gerade vermieden werden, da starke Unterschiede in der Empfangsleistung aus Sicht der Basisstation durch die flexible Sendeleistungsregelung in der Mobilstation ausgeglichen werden.

Der obige Vorteil ergibt sich dann, wenn gemäß einer Weiterbildung der Erfindung innerhalb des Frequenzkanals für den zufälligen Zugriff ein breitbandiger Frequenzbereich in schmalbandigere Unterbereiche aufgeteilt wird, von der Mobilstation, die den Verbindungsaufbau anfordert, ein Unterbereich innerhalb des Frequenzkanals ausgewählt und in diesem Unterbereich der Zugriffsfunkblock an die Basisstation gesendet wird.

Bei der Übertragung des Zugriffsfunkblocks kann dieser sendeseitig mit einem individuellen Kode gespreizt werden, so daß gegebenenfalls auch in einem Unterbereich mehrere zufällige Zugriffe stattfinden können. Vorteilhafterweise stellt der individuelle Kode die Zufallszahl des Zugriffsblocks dar und kann aus einem Satz erlaubter, der empfangenden Station bekannter Kodes ausgewählt werden. Alternativ dazu kann es vorgesehen sein, daß der Zugriffsfunkblock nicht gespreizt wird. Damit wird dessen Auswertung erleichtert.

Gemäß einer anderen Weiterbildung der Erfindung wird von der Mobilstation die Sendeleistung umso höher eingestellt, je niedriger die gemessene Empfangsleistung ist. Damit kann die Mobilstation die Leistung an die Bedingungen der Übertragungsstrecke optimal anpassen.

Als vorteilhaft hat sich erwiesen, eine Funkfelddämpfung in Abwärtsrichtung von der Mobilstation anhand der gemessenen Empfangsleistung zu schätzen und die Sendeleistung derart einzustellen, daß die Funkfelddämpfung zumindest teilweise ausgeglichen wird.

Das in Abwärtsrichtung gesendete Signal, anhand dessen die Empfangsleistung meßbar ist, kann gemäß vorteilhafter Lösungen ein Trainingssequenzsignal, ein Datensignal, ein Pilotsignal oder ein auf dem BCCH-Kanal übertragenes Kontrollsignal sein.

Von Vorteil ist es auch, wenn zumindest eine Zusatzinformation in das in Abwärtsrichtung gesendete Signal eingefügt wird, das von der Mobilstation zur Einstellung der Sendeleistung verwendet wird. Vorzugsweise besteht die Zusatzinformation aus einer Information über die von der Basisstation in Abwärtsrichtung benutzte Sendeleistung. Damit erhält die Mobilstation eine Information, die sie zur Einstellung der für den Einzelfall geeigneten Sendeleistung direkt verwenden und zusätzlich zur Messung der Empfangsleistung auswerten kann.

Im folgenden wird die Erfindung anhand eines Ausführungsbeispiels bezugnehmend auf zeichnerische Darstellungen näher erläutert.

Dabei zeigen
- FIG 1: ein Blockschaltbild eines Mobil-Kommunikationssystems zum Verbindungsaufbau für zufällige Zugriffe von Mobilstationen,
- FIG 2: eine schematische Darstellung der Rahmenstruktur für die Funkübertragung,
- FIG 3: eine schematische Darstellung der Einteilung eines Frequenzkanals zum zufälligen Zugriff in Unterbereiche, und
- FIG 4: Blockschaltbilder von Mobilstation und Basisstation.

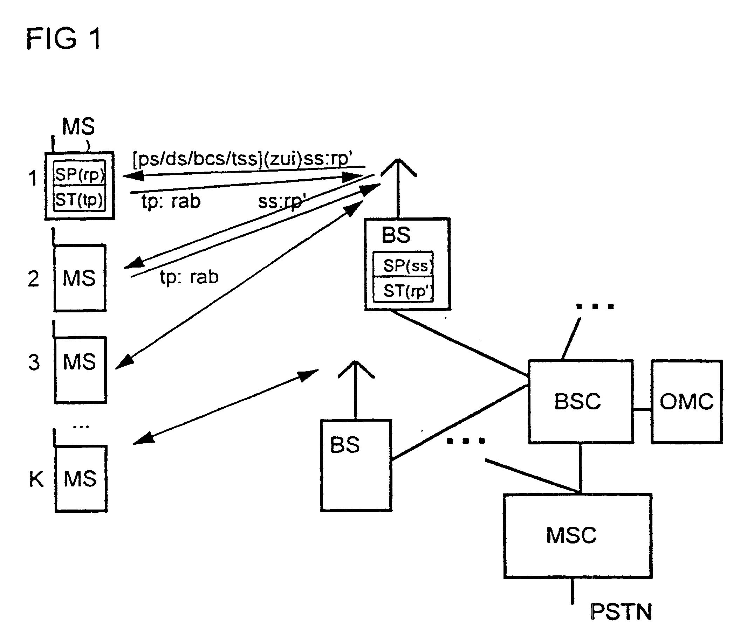

Das in FIG 1 dargestellte Mobil-Kommunikationssystem entspricht in seiner Struktur einem bekannten GSM-Mobilfunksystem, das eine Vielzahl von Mobilvermittlungsstellen MSC aufweist, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu mindestens einer Basisstation BS. Eine solche Basisstation BS ist eine Funkstation, die über eine Funkschnittstelle Nachrichtenverbindungen zu Mobilstationen MS aufbauen kann. Ein Operations- und Wartungszentrum OMC realisiert Kontroll- und Wartungsfunktionen für das Mobilfunknetz bzw. für Teile davon. In FIG 1 sind beispielhaft drei Verbindungen zur Übertragung von Nutzinformationen und Signalisierungsinformationen zwischen drei Mobilstationen MS1, MS2, MS3 und einer Basisstation ES dargestellt. Die Funktionalität dieser Struktur ist auf andere Funk-Kommunikationssysteme übertragbar, in denen die Erfindung auch zum Einsatz kommen kann.

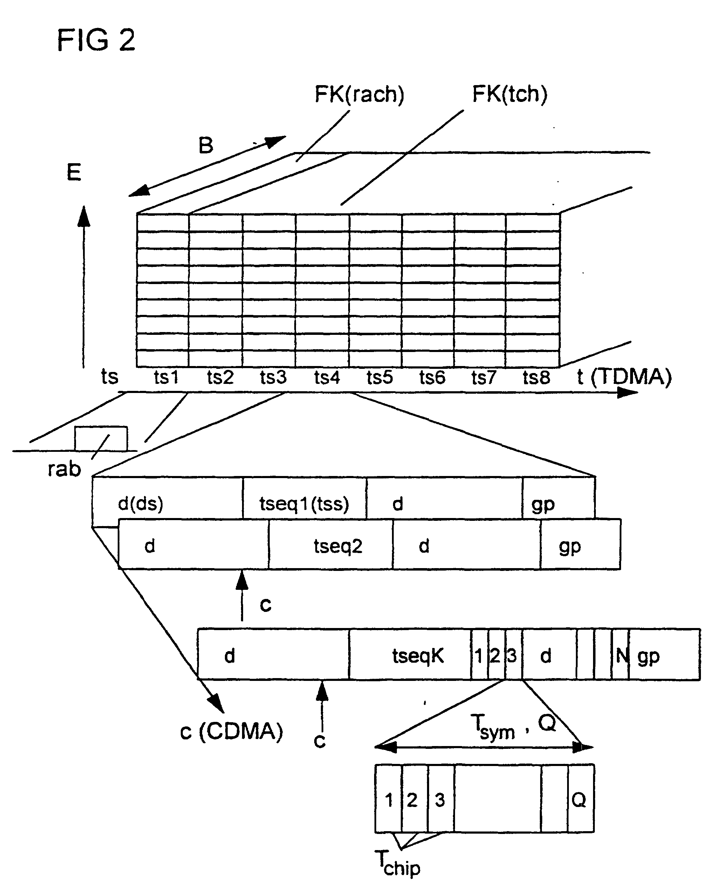

Die Mobilstationen MS können von sich aus einen zufälligen Zugriff in Aufwärtsrichtung initiieren, ohne daß der Mobilstation vorher ein Frequenzkanal zugewiesen wurde. Das System stellt zur Unterstützung des Zufallszugriffs (random access) jeweils dem Zeitraster einer zur Funkübertragung benutzten Rahmenstruktur angepaßte Frequenzkanäle (rach, random access channel) bereit. In diesem Frequenzkanal kann eine Mobilstation, die einen Verbindungsaufbau wünscht, einen Zugriffsfunkblock rab senden. Erfindungsgemäß mißt die Mobilstation MS, die einen Verbindungsaufbau wünscht, die Empfangsleistung rp eines in Abwärtsrichtung von der Basisstation BS gesendeten Signals ss und stellt eine Sendeleistung tp zum Senden des Zugriffsfunkblocks rab abhängig von der gemessenen Empfangsleistung rp ein. Das Signal ss wird von einer Signalverarbeitungseinrichtung SP der Basisstation BS zur Verfügung gestellt, von einer Steuereinrichtung ST der Basisstation BS mit einer Sendeleistung rp' versehen, und über die Funkschnittstelle zur Mobilstation übertragen. Das Signal ss, anhand dessen die Empfangsleistung rp von einer Signalverarbeitungseinrichtung SP der Mobilstation MS meßbar ist, kann gemäß vorteilhafter Lösungen ein Trainingssequenzsignal tss bei Verwendung einer TD/CDMA-Funkübertragung (siehe FIG 2), ein Datensignal ds, ein Pilotsignal ps oder ein auf dem BCCH-Kanal (broadcast channel) übertragenes Kontrollsignal bcs sein. Die Sendeleistung tp für den Zugriffsfunkblock rab wird von einer Steuereinrichtung ST der Mobilstation MS vorzugsweise umso höher geregelt, je geringer die von der Signalverarbeitungseinrichtung SP gemessene Empfangsleistung rp ist.

Zusätzlich besteht die Variante für die Mobilstation MS, eine in das Signal ss von der Basisstation BS eingefügte und über die Funkschnittstelle übertragene Zusatzinformation zui von der Signalverarbeitungseinrichtung SP auswerten zu lassen, um möglichst viele Parameter zur Sendeleistungsregelung für den Zufallszugriff zur Verfügung zu haben. Die Zusatzinformation zui, die vorzugsweise aus einer Information über die in Abwärtsrichtung eingestellte Sendeleistung rp' besteht, wird zur Einstellung der Sendeleistung zum Senden des Zugriffsfunkblock rab mobilstationsseitig benutzt.

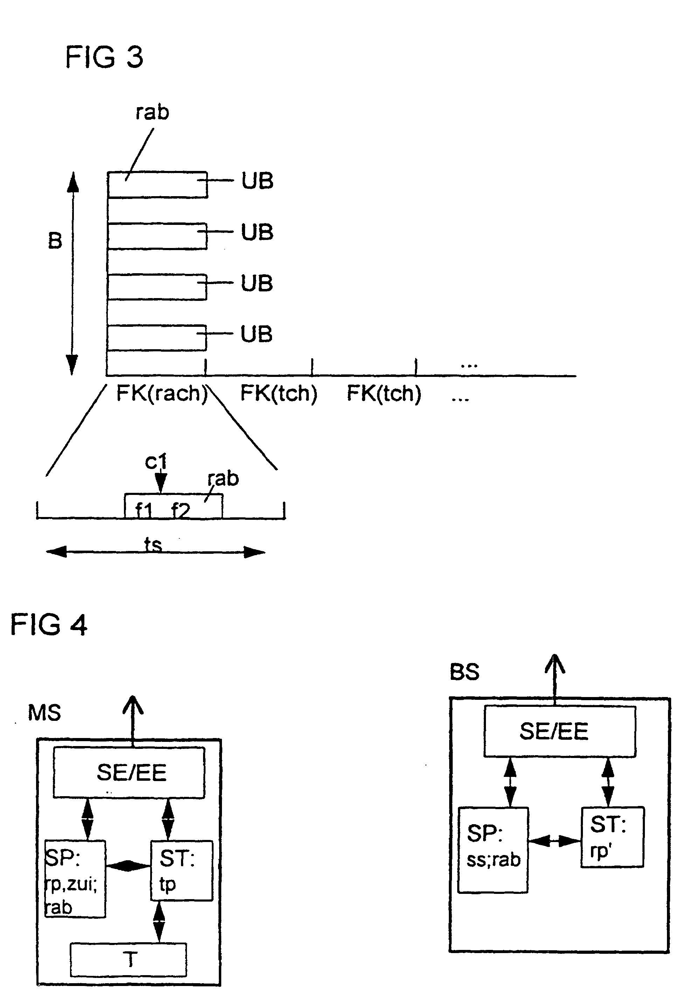

Die Signalverarbeitungseinrichtung SP in Zusammenarbeit mit der Steuereinrichtung ST führt anhand der gemessenen Empfangsleistung rp darüber hinaus eine Schätzung der Funkfelddämpfung der Verbindung zwischen Basisstation BS und Mobilstation MS durch. Die Sendeleistung tp wird daraufhin derart eingestellt, daß die ermittelte Funkfelddämpfung zumindest teilweise ausgeglichen werden kann. Ein vollständige Ausgleichsregelung der Funkfelddämpfung ist ebenfalls möglich. Die Gesamtdämpfung des benutzten Übertragungskanals setzt sich aus einer Abstandsdämpfung, der Abschattung und dem schnellen Schwund zusammen. Ein beschränktes Ausregeln der aus der Leistungsmessung geschätzten Funkfelddämpfung hat bezüglich der beiden erstgenannten Fälle den Vorteil, daß andere Signale, die in demselben Frequenzband gleichzeitig aktiv sind - wie z.B. Nutzinformationen (siehe FIG 2) oder weitere Zugriffsfunkblöcke (siehe FIG 3) - von dem gesendeten Zugriffsfunkblock rab wenig gestört werden. Ist der Zufallszugriff trotz der die die momentanen Übertragungsbedingungen berücksichtigenden Leistungseinstellung bei erstmaligem Versuch nicht detektiert worden - z.B. wegen einer aktuell starken Dämpfung beim schnellen Schwund - , kann ein erneuter Zufallszugriff mit geringfügig erhöhter Sendeleistung tp von der Mobilstation MS-initiiert werden.

Obige Ausführungen gelten entsprechend für die anderen Mobilstationen MS, die gleichzeitig oder zeitlich versetzt den Zufallszugriff starten wollen. Das Verfahren gemäß der Erfindung bringt gerade dann Vorteile, wenn mehrere Mobilstationen den zufälligen Zugriff in demselben Zeitschlitz und Frequenzband tätigen, in dem andere Signale aktiv sind. Ein Senden des Zugriffsfunkblocks rab mit maximaler Sendeleistung hätte ein massives Stören und eine Nichtdetektion dieser anderen Signale zur Folge. Dieser Nachteil kann durch die flexible Regelung der Sendeleistung tp zum Senden des Zugriffsfunkblocks rab in jeder Mobilstation abhängig von der gemessenen Empfangsleistung des empfangenen Signals ss auf der individuellen Verbindung vermieden werden.

Die Rahmenstruktur der Funkübertragung wird in FIG 2 am Beispiel eines kombinierten TD/CDMA-Verfahrens beschrieben, ist aber auch auf andere Funkübertragungsverfahren - z.B. kontinuierliche Verfahren wie DS-CDMA (Direct Sequence CDMA) - ohne weiteres anwendbar. Die Erfindung ist auch nicht darauf beschränkt, daß gleichzeitig mehrere Verbindungen zwischen Mobilstationen und einer oder mehreren Basisstationen bestehen. Die Signale müssen auch nicht durch eine verbindungsindividuelle Feinstruktur unterscheidbar sein, sondern können beispielsweise durch Zeitschlitze getrennt werden. Gemäß einer TDMA-Komponente des TD/CDMA-Verfahrens ist eine Aufteilung eines breitbandigen Frequenzbereiches B - z.B. B= 1,6 Mhz - in mehrere Zeitschlitze ts, beispielsweise acht Zeitschlitze ts1 bis ts8 vorgesehen. Jeder Zeitschlitz ts innerhalb des Frequenzbereiches B bildet einen Frequenzkanal FK. Innerhalb von Frequenzkanälen FK(tch), die zur Nutzdatenübertragung vorgesehen sind, werden Informationen mehrerer Verbindungen in Funkblöcken übertragen. Diese Funkblöcke zur Nutzdatenübertragung bestehen aus Abschnitten mit Daten d, in die Abschnitte mit empfangsseitig bekannten Trainingssequenzen tseql bis tseqK eingebettet sind. Die Daten d sind verbindungsindividuell mit einer Feinstruktur, einem Teilnehmerkode c, gespreizt, so daß empfangsseitig beispielsweise K Verbindungen durch diese CDMA-Komponente separierbar sind.

Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signalaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden acht Zeitschlitze ts zu einem Rahmen zusammengefaßt, wobei beispielsweise ein Zeitschlitz ts4 des Rahmens einen Frequenzkanal FK(tch) zur Nutzdatenübertragung bildet und wiederkehrend von einer Gruppe von Verbindungen genutzt wird. Ein Frequenzkanal FK(rach) für den zufälligen Zugriff der Mobilstationen MS wird nicht in jedem Rahmen, jedoch zu einem vorgegebenen Zeitpunkt innerhalb eines Multirahmens bereitgestellt. Die Abstände zwischen den Frequenzkanälen FK(rach) für den zufälligen Zugriff bestimmen die Kapazität, die das Mobil-Kommunikationssystem für diesen Teil des Verbindungsaufbaus zur Verfügung stellt. Gemäß dem Ausführungsbeispiel ist die Übertragung des Zugriffsfunkblocks rab im Zeitschlitz ts1 vorgesehen. Das zur Empfangsleistungsmessung in Abwärtsrichtung gesendete Signal, das von der Mobilstation zur Sendeleistungseinstellung verwendet wird, kann als Datensignal ds den Daten d oder als Trainingssequenzsignal tss der Trainingsseqenz eines in Abwärtsrichtung übertragenen Funkblocks in einfacher Weise entnommen werden, sodaß es hierfür keiner zusätzlichen Belegung funktechnischer Ressourcen bedarf.

In FIG 3 ist die Struktur des Frequenzkanals FK(rach) für den zufälligen Zugriff gezeigt. Der breitbandige Frequenzbereich B = 1,6 MHz, der sich z.B. aus dem Frequenzband eines Organisationskanals des Mobil-Kommunikationssystems beaufschlagt mit dem Duplexabstand berechnet, beinhaltet vier Unterbereiche UB mit jeweils z.B. 200 kHz Bandbreite, die jeweils durch einen Bereich von 200 kHz getrennt sind, um gegenseitige Störungen zu verringern. Innerhalb dieser Unterbereiche UB können bei Bedarf Zugriffsfunkblöcke rab von Mobilstationen MS ohne vorherige netzseitige Zuweisung und ohne Spreizung gesendet werden. Es können also Zugriffsfunkblöcke nach dem GSM-Standard verwendet werden. Bei einer alternativen Aufteilung des Frequenzkanals FK(rach) für den zufälligen Zugriff sind insgesamt acht Unterbereiche UB realisiert, die sich frequenzmäßig überlappen können. Zur besseren Unterscheidung sind die Zugriffsfunkblöcke rab mit einem individuellen Kode c1 gespreizt, können aber grundsätzlich auch ohne Spreizung gesendet werden.

Der Zugriffsfunkblock rab ist im Vergleich zu den Funkblöcken zur Nutzdatenübertragung nach FIG 2 kürzer, d.h. die Schutzzeit wird verlängert. Dies ist nötig, um trotz der noch nicht erfolgten zeitlichen Synchronisation einen sicheren Empfang in der Basisstation BS zu sichern. Der Zugriffsfunkblock rab wird mit der gemäß der Erfindung variabel einstellbaren Sendeleistung abgestrahlt. Der Zugriffsfunkblock rab enthält eine empfangsseitig bekannte Bitfolge f1 zur zeitlichen Synchronisation und eine Zufallszahl f2. Anhand der bekannte Bitfolge f1 kann die Basisstation BS das Vorliegen eines Zugriffsfunkblocks rab feststellen und aus dem Zeitpunkt des Eintreffens eine erste zeitliche Synchronisation vornehmen. Die durch die Mobilstation MS gewählte Zufallszahl f2, die gleichzeitig einen Bezug zum individuellen Kode c zur Spreizung des Zugriffsfunkblocks rab darstellen kann, wird als Referenz für die nachfolgende Zuteilung eines Frequenzkanal FK zur weiteren Signalisierung für den Verbindungsaufbau genutzt. Mit dieser Zufallszahl f2 kann die Mobilstation MS eine an sie adressierte Zuteilung erkennen.

FIG 4 zeigt den Aufbau einer Mobilstation MS sowie einer Basisstation BS mit den für die Erfindung erforderlichen Einrichtungen. Von der Basisstation BS können die in den Frequenzkanälen für den zufälligen Zugriff gesendeten Zugriffsfunkblöcke detektiert und ausgewertet und für die in den Frequenzkanälen übertragenen Nutzinformationen eine Teilnehmerseparierung und eine Detektion der Teilnehmerdaten vorgenommen werden.

Die Mobilstation MS enthält ein Bedienfeld T, eine Signalverarbeitungseinrichtung SP, eine Steuereinrichtung ST und eine Sende/Empfangseinrichtung SE/EE. Am Bedienfeld T kann der Teilnehmer Eingaben vornehmen, u.a. eine Eingabe für einen Verbindungsaufbauwunsch. In der Signalverarbeitungseinrichtung SP wird ein Zugriffsfunkblock rab gebildet und mit der in der Steuereinrichtung ST eingestellten Sendeleistung rp über die Sende/Empfangseinrichtung SE/EE ausgesendet. Die Steuereinrichtung ST wählt die Unterbereiche innerhalb des nächstmöglichen Frequenzkanals zum zufälligen Zugriff nach den zuvor beschriebenen Prinzipien aus. Der Zugriffsfunkblock rab wird nach einer entsprechenden Signalaufbereitung durch die Sendeeinrichtung SE schmalbandig im ausgewählten Unterbereich gesendet. Zuvor wertet die Signalverarbeitungseinrichtung SP das über die Sende/Empfangseinrichtung SE/EE eingetroffene Signal ss aus, indem sie deren Empfangsleistung rp misst und der Steuereinrichtung ST mitteilt. Die Messung der Empfangsleistung erfolgt beispielsweise durch Aufsummierung der Quadrate der Abtastwerte des empfangenen Signals ss - im Digitalen - oder durch Integration über die Quadrate der Signalamplituden - im Analogen - oder durch Aufsummieren der geschätzten Abtastwerte der Kanalimpulsantwort. Dies wird in der Signalverarbeitungseinrichtung SP ausgeführt. Als Messung kann auch die Bestimmung eines Schätzwerts für die Empfangsleistung aufgefasst werden. Die in dem Signal ss gegebenenfalls enthaltene Zusatzinformation zui wird ebenfalls von der Signalverarbeitungseinrichtung SP ausgewertet und der Steuereinrichtung ST zur Sendeleistungsregelung zur Verfügung gestellt.

Die Basisstation BS enthält eine Sende/Empfangseinrichtung SE/EE, die Empfangssignale verstärkt, ins Basisband umsetzt und demoduliert bzw. Sendesignale wie das Signal ss moduliert und für die hochfrequente Abstrahlung aufbereitet. Eine Signalverarbeitungeinrichtung SP, die z.B. als digitaler Signalprozessor einen JD-Prozessor zum Detektieren eintreffender Nutzinformationen und Signalisierungsinformationen nach dem JD-CDMA-Verfahren (joint detection) aufweist, wertet auch den oder die die Zugriffsblöcke rab aus. Das Signal ss, das in Abwärtsrichtung abzustrahlen ist, wird von einer Steuereinrichtung ST mit der Sendeleistung rp' versehen und als Datensignal oder Trainingssequenzsignal in einen Funkblock gemäß FIG 2 eingebunden. Für den Fall, daß es sich um ein Pilotsignal handelt, wird es unabhängig von einer Nutzdatenübertragung - vorzugsweise andauernd - gesendet. Bei Verwendung des BCCH-Kontrollkanals wird das Signal ss von der Steuereinrichtung ST als Kontrollsignal eingebunden und beispielsweise als Organisationsinformation zur Mobilstation MS gesendet.

Die Trennung der verschiedenen Unterbereiche erfolgt durch eine Filterbank und anschließend eine einzelne Auswertung der Zugriffsblöcke rab in den jeweiligen Unterbereichen. Alternativ kann auf eine vorherige Tiefpaßfilterung verzichtet und breitbandig eine Detektion mit einer Einzelteilnehmer- (single user) oder mit einer gemeinsamen Auswertung (joint detection) durchgeführt werden.

Die Auswertung erfolgt durch Feststellen der Korrelation zwischen den empfangenen Signalen und den in der Basisstation BS bekannten Bitfolgen (siehe FIG 3). Dabei wird auch der Zeitpunkt der größten Korrelation bestimmt, der im weiteren der zeitlichen Synchronisation dient. Alternativ kann auch eine signalangepaßte Filterung oder ein anderer linearer Algorithmus (z.B. gemäß dem zero forcing oder dem minimum square error Kriterium) angewendet werden.

## Patentansprüche

1. Verfahren zum Verbindungsaufbau für Mobilstationen (MS) eines Funk-Kommunikationssystems mit zumindest einer Basisstation (BS), bei dem
- für die Mobilstationen (MS) in Aufwärtsrichtung wiederkehrend Frequenzkanäle (FK(rach)) für einen zufälligen Zugriff bereitgestellt werden,
- von der Mobilstation (MS), die einen Verbindungsaufbau anfordert, eine Empfangsleistung (rp) eines in Abwärtsrichtung von der Basisstation (BS) gesendeten Signals (ss) gemessen wird,
- von der Mobilstation (MS) abhängig von der gemessenen Empfangsleistung (rp) eine Sendeleistung (tp) zum Senden eines Zugriffsfunkblocks (rab) zur Basisstation (BS) eingestellt wird, und
- bei einer nicht erfolgten Detektion des Zugriffsfunkblocks (rab) durch die Basisstation (BS) ein erneuter Zugriffsfunkblock (rab) mit einer erhöhten Sendeleistung (tp) gesendet wird.

2. Verfahren nach Anspruch 1, bei dem
das Funk-Kommunikationssystem als TDMA/CDMA Funk-Kommunikationssystem ausgeprägt ist, bei dem in durch Zeitschlitze (ts) gebildeten Frequenzkanälen (FK) gleichzeitig Informationen mehrerer Verbindungen zwischen den Mobilstationen (MS) und der Basisstation (BS) übertragen werden, wobei die Informationen unterschiedlicher Verbindungen gemäß einer verbindungsindividuellen Feinstruktur unterscheidbar sind.

3. Verfahren nach Anspruch 2, bei dem
die Informationen unterschiedlicher Verbindungen mit individuellen Kodes (c) gespreizt werden.

4. Verfahren nach einem der vorherigen Ansprüche, bei dem von der Mobilstation (MS) die Sendeleistung (tp) umso höher eingestellt wird, je niedriger die gemessene Empfangsleistung (rp) ist.

5. Verfahren nach einem der vorherigen Ansprüche, bei dem
das in Abwärtsrichtung gesendete Signal (ss) ein Pilotsignal (ps) ist.

6. Verfahren nach einem der Ansprüche 1 bis 4, bei dem
das in Abwärtsrichtung gesendete Signal (ss) ein auf dem BCCH-Kanal übertragenes Kontrollsignal (bcs) ist.

7. Verfahren nach einem der Ansprüche 1 bis 4, bei dem
das in Abwärtsrichtung gesendete Signal (ss) ein Trainingssequenzsignal(tss) ist.

8. Verfahren nach einem der Ansprüche 1 bis 4, bei dem
das in Abwärtsrichtung gesendete Signal (ss) ein Datensignal(ds) ist.

9. Verfahren nach einem der vorhergehenden Ansprüche, bei dem von der Mobilstation (MS) anhand der gemessenen Empfangsleistung (rp) eine Funkfelddämpfung in Abwärtsrichtung geschätzt wird, und die Sendeleistung (tp) derart eingestellt wird, daß die Funkfelddämpfung zumindest teilweise ausgeglichen wird.

10. Verfahren nach Anspruch 9, bei dem
von der Mobilstation (MS) die Sendeleistung (tp) derart eingestellt wird, daß die Funkfelddämpfung vollständig ausgeglichen wird.

11. Verfahren nach einem der vorhergehenden Ansprüche, bei dem zumindest eine Zusatzinformation (zui) in das in Abwärtsrichtung gesendete Signal (ss) eingefügt wird, das von der Mobilstation (MS) zur Einstellung der Sendeleistung (tp) verwendet wird.

12. Verfahren nach Anspruch 11, bei dem
die Zusatzinformation (zui) aus einer Information über die von der Basisstation (BS) in Abwärtsrichtung benutzte Sendeleistung (rp') besteht.

13. Verfahren nach einem der vorhergehenden Ansprüche, bei dem innerhalb des Frequenzkanals (FK(rach)) für den zufälligen Zugriff ein breitbandiger Frequenzbereich (B) in schmalbandigere Unterbereiche (UB) aufgeteilt wird,
von der Mobilstation (MS), die den Verbindungsaufbau anfordert, ein Unterbereich (UB) innerhalb des Frequenzkanals (FK(rach)) ausgewählt wird, und
von der Mobilstation (MS) in diesem Unterbereich (UB) der Zugriffsfunkblock (rab) an die Basisstation (BS) gesendet wird.

14. Verfahren nach einem der vorhergehenden Ansprüche, bei dem der Zugriffsfunkblock (rab) nicht gespreizt wird.

15. Verfahren nach einem der Ansprüche 1 bis 13, bei dem
der Zugriffsfunkblock (rab) mit einem individuellen Kode (c1) gespreizt wird..

16. Mobilstation (MS) zur Durchführung des Verfahrens nach Anspruch 1, mit
- einem Bedienfeld (T) zum Auslösen des zufälligen Zugriffs,
- einer Signalverarbeitungseinrichtung (SP) zum Messen der Empfangsleistung (rp) des in Abwärtsrichtung von der Basisstation (BS) gesendeten Signals (ss) und zum Erzeugen des Zugriffsfunkblocks (rab),
- einer Steuereinrichtung (ST) zum Einstellen der Sendeleistung (tp) für das Senden des Zugriffsfunkblocks (rab) zur Basisstation (BS) abhängig von der gemessenen Empfangsleistung (rp) und zum Einstellen einer erhöhten Sendeleistung (tp) bei einer nicht erfolgten Detektion des gesendeten Zugriffsfunkblocks (rab) durch die Basisstation (BS).

## Claims

1. Method for establishing connections for mobile stations (MS) of a radio communication system having at least one base station (BS), in which
- frequency channels (FK(rach)) are made available on a recurring basis for random access in the upward direction for the mobile stations (MS);
- a receive power level (rp) for a signal (ss) transmitted in the downward direction by the base station (BS) is measured by the mobile station (MS) which is requesting a connection to be established;
- depending on the measured receive power level (rp), a transmission power level (tp) is set by the mobile station (MS) for sending a radio access block (rab) to the base station (BS); and
- if the radio access block (rab) has not been detected by the base station (BS) a renewed radio access block (rab) is sent with an increased transmission power level (tp).

2. Method according to Claim 1, in which the radio communication system is implemented as a TDMA/CDMA radio communication system, in which information for a plurality of connections is transferred at the same time between the mobile stations (MS) and the base station (BS) in frequency channels (FK) formed by time slots (ts), whereby the information for different connections can be differentiated in accordance with a connection-specific fine structure.

3. Method according to Claim 2, in which the information for different connections is spread using individual codes (c).

4. Method according to one of the preceding claims, in which the lower the measured receive power level (rp), the higher is the transmission power level (tp) set by the mobile station (MS).

5. Method according to one of the preceding claims, in which
the signal (ss) sent in the downward direction is a pilot signal (ps).

6. Method according to one of Claims 1 to 4, in which the signal (ss) sent in the downward direction is a control signal (bcs) transmitted on the BCCH channel.

7. Method according to one of Claims 1 to 4, in which the signal (ss) sent in the downward direction is a training sequence signal (tss).

8. Method according to one of Claims 1 to 4, in which the signal (ss) sent in the downward direction is a data signal (ds).

9. Method according to one of the preceding claims, in which a radio field attenuation in the downward direction is estimated by the mobile station (MS) on the basis of the measured receive power level (rp) and the transmission power level (tp) is set such that the radio field attenuation is compensated for at least in part.

10. Method according to Claim 9, in which the transmission power level (tp) is set by the mobile station (MS) such that the radio field attenuation is compensated for in its entirety.

11. Method according to one of the preceding claims, in which at least one additional item of information (zui) is inserted into the signal (ss) sent in the downward direction which is used by the mobile station (MS) in order to set the transmission power level (tp).

12. Method according to Claim 11, in which the additional information (zui) comprises information about the transmission power level (rp') used by the base station (BS) in the downward direction.

13. Method according to one of the preceding claims, in which a broadband frequency range (B) is divided into narrower band sub-ranges (UB) within the frequency channel (FK(rach)) used for random access, a sub-range (UB) within the frequency channel (FK(rach)) is selected by the mobile station (MS) which is requesting a connection to be established, and in this sub-range (UB) the radio access block (rab) is sent to the base station (BS) by the mobile station (MS).

14. Method according to one of the preceding claims, in which the radio access block (rab) is not spread.

15. Method according to one of Claims 1 to 13, in which the radio access block (rab) is spread using an individual code (c1).

16. Mobile station (MS) for performing the method according to Claim 1, with
- an operator control panel (T) for initiating the random access;
- a signal processing facility (SP) for measuring the receive power level (rp) of the signal (ss) sent in the downward direction by the base station (BS) and for generating the radio access block (rab);
- a control facility (ST) for setting the transmission power level (tp) for sending the radio access block (rab) to the base station (BS) dependent on the measured receive power level (rp) and for setting an increased transmission power level (tp) in the event of the sent radio access block (rab) not being detected by the base station (BS).

## Revendications

1. Procédé destiné à l'établissement de communications par des postes mobiles (MS) dans un système de communication par radio ayant au moins une station de base (BS), dans lequel
- des canaux de fréquence (FK(rach)) répétitifs sont mis, dans le sens ascendant, à la disposition des postes mobiles (MS) pour un accès aléatoire,
- le poste mobile (MS), qui souhaite établir une communication, mesure la puissance de réception (rp) d'un signal (ss) émis dans le sens descendant par la station de base (BS),
- le poste mobile (MS) règle, en fonction de la puissance de réception (rp) mesurée, une puissance d'émission (tp) pour émettre un bloc d'accès radio (rab) vers la station de base (BS) et,
- si le bloc d'accès radio (rab) n'est pas détecté par la station de base (BS), un nouveau bloc d'accès radio (rab) est émis avec une puissance d'émission (tp) supérieure.

2. Procédé selon la revendication 1 dans lequel
le système de communication par radio est conçu comme système de communication par radio à TDMA/CDMA dans lequel, sur des canaux de fréquence (FK) formés par des créneaux temporels (ts), des informations de plusieurs liaisons sont transmises simultanément entre les postes mobiles (MS) et la station de base (BS), les informations de liaisons différentes étant séparées conformément à une structure fine individuelle à chaque liaison.

3. Procédé selon la revendication 2 dans lequel
les informations de liaisons différentes sont étalées avec des codes (c) individuels.

4. Procédé selon l'une des revendications précédentes dans lequel
le poste mobile (MS) règle la puissance d'émission (tp) sur une valeur d'autant plus élevée que la puissance de réception (rp) mesurée est plus faible.

5. Procédé selon l'une des revendications précédentes dans lequel
le signal (ss) émis dans le sens descendant est un signal pilote (ps).

6. Procédé selon l'une des revendications 1 à 4 dans lequel
le signal (ss) émis dans le sens descendant est un signal de contrôle (bcs) transmis sur le canal BCCH.

7. Procédé selon l'une des revendications 1 à 4 dans lequel
le signal (ss) émis dans le sens descendant est un signal de séquence d'entraînement (tss).

8. Procédé selon l'une des revendications 1 à 4 dans lequel
le signal (ss) émis dans le sens descendant est un signal de données (ds).

9. Procédé selon l'une des revendications précédentes dans lequel
le poste mobile (MS) évalue, à l'aide de la puissance de réception (rp) mesurée, un affaiblissement du champ hertzien dans le sens descendant et règle la puissance d'émission (tp) de telle manière que l'affaiblissement du champ hertzien est compensé au moins en partie.

10. Procédé selon la revendication 9 dans lequel
le poste mobile (MS) règle la puissance d'émission (tp) de telle manière que l'affaiblissement du champ hertzien est compensé en totalité.

11. Procédé selon l'une des revendications précédentes dans lequel
au moins une information supplémentaire (zui) est insérée dans le signal (ss), émis dans le sens descendant, qui est utilisé par le poste mobile (MS) pour régler la puissance d'émission (tp).

12. Procédé selon la revendication 11 dans lequel
l'information supplémentaire (zui) se compose d'une information concernant la puissance d'émission (rp') utilisée dans le sens descendant par la station de base (BS).

13. Procédé selon l'une des revendications précédentes dans lequel,
à l'intérieur du canal de fréquence (FK(rach)) destiné à l'accès aléatoire, une plage de fréquence (B) à large bande est divisée en sous-plages (UB) à bande plus étroite,
le poste mobile (MS), qui sollicite l'établissement d'une communication, sélectionne une sous-plage (UB) à l'intérieur du canal de fréquence (FK(rach)) et
le poste mobile (MS) envoie, dans cette sous-plage (UB), le bloc d'accès radio (rab) à la station de base (BS).

14. Procédé selon l'une des revendications précédentes dans lequel
le bloc d'accès radio (rab) n'est pas étalé.

15. Procédé selon l'une des revendications 1 à 13 dans lequel
le bloc d'accès radio (rab) est étalé avec un code individuel (c1).

16. Poste mobile (MS) destiné à l'exécution du procédé selon la revendication 1, comportant
- un panneau de commande (T) permettant de déclencher l'accès aléatoire,
- un dispositif de traitement des signaux (SP) destiné à mesurer la puissance de réception (rp) du signal (ss) émis dans le sens descendant par la station de base (BS) et à générer le bloc d'accès radio (rab),
- un dispositif de commande (ST) destiné au réglage, en fonction de la puissance de réception (rp) mesurée, de la puissance d'émission (tp) avec laquelle le bloc d'accès radio (rab) est envoyé à la station de base (BS) et au réglage d'une puissance d'émission (tp) supérieure dans le cas où le bloc d'accès radio (rab) émis n'a pas été détecté par la station de base (BS).
